# EUROPÄISCHE PATENTSCHRIFT

(11) **EP 1 921 345 B1**
(45) Veröffentlichungstag und Bekanntmachung des Hinweises auf die Patenterteilung: **05.08.2009**
(21) Anmeldenummer: 06123723.6
(22) Anmeldetag: 09.11.2006
(51) Int. Cl.: F16H 7/12, F16H 7/08

(54) **Spannvorrichtung zum Spannen eines Antriebsmittels und Verwendung einer derartigen Vorrichtung**
Tensioner device tensioning a drive means and use of said device
Dispositif de serrage pour la fixation d' un élément de transmission et usage d'un tel dispositif

(43) Veröffentlichungstag der Anmeldung: 14.05.2008
(73) Patentinhaber: Ford Global Technologies, LLC, Dearborn, MI 48126 (US)
(72) Erfinder: Bertram, Ulrich, 50129, Bergheim (DE)
(74) Vertreter: Drömer, Hans-Carsten

(56) Entgegenhaltungen:
- DE-A1- 2 118 208
- DE-A1- 4 017 630
- US-A- 4 971 589

## Beschreibung

Die Erfindung betrifft eine Spannvorrichtung zum Spannen eines Antriebsmittels wie beispielsweise einer Kette oder eines Riemens, insbesondere zur Verwendung in einer Brennkraftmaschine, mit einem auf einem Schwenkarm gelagerten und um eine Achse schwenkbaren Spannmittel, welches mit dem Antriebsmittel in Eingriff bringbar ist und dadurch das Antriebsmittel entlang seiner Längsachse mit Zugkräften beaufschlagt und damit spannt, wobei das Spannmittel mittels eines Federelementes in Richtung Antriebsmittel kraftbeaufschlagt ist, entsprechend dem Oberbegriff des Anspruchs 1 und wie sie aus der DE 4017630 A bekannt ist.

Des Weiteren betrifft die Erfindung die Verwendung einer derartigen Spannvorrichtung.

Eine Vorrichtung der oben genannten Art wird beispielsweise in einem Kraftfahrzeug verwendet. Ein Teil der in der Brennkraftmaschine durch die chemische Umsetzung des Kraftstoffes gewonnenen Leistung wird genutzt, um die für den Betrieb der Brennkraftmaschine und des Kraftfahrzeuges erforderlichen Nebenaggregate, insbesondere die Ölpumpe, die Kühlmittelpumpe, die Lichtmaschine und dergleichen, oder die für die Steuerung der Ventile erforderlichen Nockenwellen anzutreiben.

Für den Antrieb werden in der Regel Riementriebe oder Kettentriebe verwendet, wobei im Rahmen der vorliegenden Erfindung die verschiedenen Antriebsmittel - wie beispielsweise Riemen und Kette - allgemein als Antriebsmittel bezeichnet werden d. h. unter den Oberbegriff "Antriebsmittel" subsumiert werden. Im folgenden ist daher von einem Antriebsmittel die Rede.

Der Riementrieb bzw. Kettentrieb soll dabei unter möglichst geringen Energieverlusten und mit möglichst wenig Wartungsaufwand durch Nachspannen ein Drehmoment von der Kurbelwelle auf die Nebenaggregate bzw. die Nockenwelle übertragen. Häufig wird dabei der Antrieb mehrerer Nebenaggregate in einem Riemen- bzw. Kettentrieb zusammengefaßt. Um das Antriebsmittel - den Riemen bzw. die Kette - unter Spannung zu halten und damit einen möglichst sicheren und verschleißfreien Antrieb zu gewährleisten, werden an geeigneter Stelle des Antriebes sogenannte Riemen- bzw. Kettenspannvorrichtungen vorgesehen.

Derartige Spannvorrichtungen umfassen ein Spannmittel, welches mit dem Antriebsmittel in Eingriff gebracht wird und das Antriebsmittel quer zur Zugrichtung d. h. entlang der Längsachse mit einer Kraft beaufschlagt, so daß das Antriebsmittel ständig unter Spannung steht und gehalten wird. Hierzu wird das auf einem Schwenkarm gelagerte Spannmittel mittels eines Federelementes in Richtung des Antriebsmittels kraftbeaufschlagt. Dies ist für die sichere Übertragung eines genügend großen Drehmomentes bzw. Antriebsmomentes unumgänglich, insbesondere um einen Schlupf des Antriebsmittels zu vermeiden d.h. um einen schlupffreien Antrieb zu gewährleisten.

Insbesondere beim Antrieb der Nockenwellen einer Brennkraftmaschine ist ein schlupffreier Betrieb zwingend erforderlich, um exakte Steuerzeiten der Ventile bezogen auf die Kurbelwellendrehstellung zu gewährleisten. Zudem ist zu berücksichtigem, daß auch das Antriebsmittel einem Verschleiß unterworfen ist, der sich unter anderem dadurch bemerkbar macht, daß sich die Länge des Antriebsmittels mit zunehmender Betriebsdauer kontinuierlich vergrößert. Eine Spannvorrichtung gleicht diese verschleißbedingten Längenänderungen des Antriebsmittels während des Betriebes aus.

An den Spannvorrichtungen nach dem Stand der Technik wird die Bewegungsfreiheit des um eine Achse schwenkbar gelagerten Spannmittels lediglich durch das Antriebsmittel selbst und damit nur einseitig begrenzt . Einer Schwenkbewegung des Spannmittels, die vom Antriebsmittel weg gerichtet ist, steht hingegen lediglich die Rückstellkraft des Federelementes entgegen.

Während das Antriebsmittel die Schwenkbewegung des Spannmittels - ähnlich einem Anschlag - tatsächlich begrenzt, nimmt bei einer Schwenkbewegung des Spannmittels entgegen der Rückstellkraft des Federelementes lediglich die Rückstellkraft des Federelementes zu, wobei der Schwenkbewegung des Spannmittels grundsätzlich keine Grenzen gesetzt sind, wenn nur eine genügend große Kraft vom Antriebsmittel auf das Spannmittel ausgeübt wird.

Bei dem Antriebsmittel handelt es sich um ein schwingungsfähiges System, welches während des Betriebes zu Schwingungen angeregt wird und dadurch auf das Spannmittel Kräfte ausübt.

Zu berücksichtigen ist dabei, daß beispielsweise die Kurbelwelle zusammen mit den an ihr angekoppelten Triebwerksteilen ein schwingungsfähiges System darstellt. Die Kurbelwelle wird durch die sich zeitlich verändernden Drehkräfte, welche über die an den einzelnen Kurbelzapfen angelenkten Pleuelstangen in die Kurbelwelle eingeleitet werden, zu Drehschwingungen angeregt. Die Drehschwingungen der Kurbelwelle werden dabei auf das Antriebsmittel, das über ein auf der Kurbelwelle angeordnetes Antriebsrad angetrieben wird, übertragen.

Auch die Nockenwelle - als Beispiel für eine mittels Antriebsmittel anzutreibende Welle - stellt ein schwingungsfähiges System dar, welches zu Drehschwingungen angeregt wird. So wird die umlaufende Nockenwelle mit einem Drehmoment entgegen ihrer Drehrichtung beaufschlagt, wenn der Nocken im Bereich seiner Nockennase auf den Stößel aufläuft und das Ventil entgegen der Vorspannkraft der Ventilfedermittel in Richtung Ventiloffenstellung bewegt, wohingegen beim Schließvorgang, wenn das Ventil mittels der Ventilfedermittel in Richtung Ventilschließstellung gedrückt wird, die Nockenwelle über den Nocken mit einem zusätzlichen Drehmoment in Richtung Nockenwellendrehung beaufschlagt wird. Auch die Drehschwingungen der Nockenwelle werden auf das Antriebsmittel, welches sich mit einem auf der Nockenwelle angeordneten Rad d. h. Abtriebsrad in Eingriff befindet, übertragen.

Die beschriebenen Effekte führen - wie eingangs erwähnt - dazu, daß das Antriebsmittel während des Betriebes schwingt d. h. insbesondere quer zu seiner Längsrichtung flattert und dabei Kräfte auf das Spannmittel überträgt, wodurch das Spannmittel gegebenenfalls entgegen der Rückstellkraft des Federelementes verschwenkt wird und dies - wie oben ausgeführt - ohne Begrenzung. Dabei kann das Spannmittel vom Antriebsmittel abheben.

Bedingt durch das Flattern des Antriebsmittels und das hierdurch hervorgerufene Auslenken bzw. Verschwenken des Spannmittels kann insbesondere nicht gewährleistet werden, daß die Spannvorrichtung ihre Funktion erfüllt bzw. aufrechterhält und das Antriebsmittel während des gesamten Betriebes unter Spannung hält. Darüber hinaus outwickelt ist das Flattern auch unerwünschte Geräusche .

Das Flattern kann zudem dazu führen, daß das Antriebsmittel aus einem auf der Kurbelwelle und/oder aus einem auf einer anzutreibenden Welle angeordnetem Riemen- bzw. Kettenrad springt, was zur Funktionsuntüchtigkeit des gesamten Antriebs führt und gegebenenfalls zur Zerstörung des Riemens bzw. der Kette. Das Flattern kann auch ursächlich dafür sein, daß das Antriebsmittel sich nicht kontinuierlich mit den jeweiligen Antriebs- bzw. Abtriebsrädern in Eingriff befindet und beispielsweise bei Verwendung eines Zahnriemens einzelne Zähne des Antriebs- bzw. Abtriebsrades infolge Flattern übersprungen werden, wobei das vorgeschriebene Zusammenwirken von Antriebsmittel und Rad zumindest zeitweise aufgehoben wird. Handelt es sich bei der anzutreibenden Welle um die Nockenwelle eines Ventiltriebs, kann es dabei zur Verstellung der Steuerzeiten kommen.

Vor diesem Hintergrund ist es die Aufgabe der vorliegenden Erfindung eine Spannvorrichtung zum Spannen eines Antriebsmittels gemäß dem Oberbegriff des Anspruchs 1 d. h. der gattungsbildenden Art bereitzustellen, mit der die aus dem Stand der Technik bekannten Nachteile überwunden werden und mit der insbesondere dem Flattern des Antriebsmittels entgegengewirkt wird.

Eine weitere Teilaufgabe der vorliegenden Erfindung ist es, Verwendungen einer derartigen Spannvorrichtung aufzuzeigen.

Gelöst wird die erste Teilaufgabe durch eine Spannvorrichtung zum Spannen eines Antriebsmittels mit den Merkmalen des Anspruchs 1.

Im Gegensatz zu den herkömmlichen Spannvorrichtungen nach dem Stand der Technik, wird bei der erfindungsgemäßen Spannvorrichtung die Bewegungsfreiheit des um eine Achse schwenkbar gelagerten Spannmittels beidseitig des Schwenkarms begrenzt, wodurch das Flattern des Antriebsmittels zwar nicht völlig unterbunden wird, was auch nicht beabsichtigt ist und nicht vorteilhaft wäre, aber das Flattern begrenzt werden kann.

Dadurch, daß bei der erfindungsgemäßen Spannvorrichtung zwei Anschlagselemente vorgesehen sind, kann das auf einem Schwenkarm gelagerte Spannmittel nicht mehr beliebig verschwenkt werden, sondern beim Auslenken bzw. Verschwenken lediglich einen vorgebaren Verschwenkwinkel überstreichen, der - vereinfacht - durch den Abstand und die Anordnung der beiden Anschlagselemente festgelegt wird. Tatsächlich wird die Schwenkbewegung des Spannmittels durch das Antriebsmittel einerseits und das zweite Anschlagselement andererseits begrenzt, wie im weiteren noch deutlich werden wird.

Das Spannmittel bzw. der Schwenkarm wird mittels eines Federelementes in Richtung des Antriebsmittels kraftbeaufschlagt, verschwenkt und dabei mit dem Antriebsmittel in Eingriff gebracht. Beim Verschwenken kann der Schwenkarm das erste Anschlagselement, welches auf der dem Antriebsmittel zugewandten Seite des Schwenkarms angeordnet ist, in Richtung Antriebsmittel mitnehmen, wenn der Schwenkarm am ersten Anschlagselement anschlägt, wodurch auch das zweite Anschlagselement, das auf der dem Antriebsmittel abgewandten Seite des Schwenkarms angeordnet ist, mitgenommen wird, da es erfindungsgemäß einen unveränderlichen Abstand zum ersten Anschlagselement aufweist und damit an die Bewegung des ersten Anschlagselementes gekoppelt ist.

Auf diese Weise bringt der Schwenkarm das erste und zweite Anschlagselement in Richtung des Antriebsmittels in Position, wobei das erste Anschlagselement keinen Anschlag im eigentlichen Sinne darstellt, sondern in seiner Hauptfunktion als Mitnehmer für das zweite Anschlagselement dient, das auf der dem Antriebsmittel abgewandten Seite des Schwenkarms während des Betriebes als Begrenzung dient.

Eine durch Verschleiß bedingte Längenänderung des Antriebsmittels wird während des Betriebs ausgeglichen, indem das Spannmittel mitsamt Anschlagselementen in Richtung Antriebsmittel vorrückt.

Eine Schwenk- bzw. Auslenkbewegung des Spannmittels, die vom Antriebsmittel weg gerichtet ist, wird dabei - auf der dem Antriebsmittel abgewandten Seite des Schwenkarms - durch das zweite Anschlagselement begrenzt, das in der Bewegungsfreiheit mittels eines Stopperelementes in der Art eingeschränkt ist, daß im wesentlichen nur eine Bewegung in Richtung Antriebsmittel zugelassen wird.

Somit wird durch die erfindungsgemäße Spannvorrichtung die erste der Erfindung zugrunde liegende Aufgabe gelöst, nämlich eine Spannvorrichtung bereitzustellen, mit der die nach dem Stand der Technik bekannten Nachteile überwunden werden und mit der insbesondere dem Flattern des Antriebsmittels entgegengewirkt wird.

Vorteilhafte Ausführungsformen der Spannvorrichtung gemäß den Unteransprüchen werden im folgenden erörtert.

Vorteilhaft sind Ausführungsformen der Spannvorrichtung, bei denen das Spannmittel eine Spannrolle umfaßt, die drehbar auf dem Schwenkarm gelagert ist. Die Verwendung einer drehbar gelagerten Spannrolle als Spannmittel ist vorteilhaft, weil bei einer derartigen Ausführungsform die Spannrolle auf dem Antriebsmittel abrollen kann. Dabei kommt es idealerweise nicht zu einer Relativbewegung zwischen Spannmittel d. h. Spannrolle und Antriebsmittel. Dies hat gleich mehrere Vorteile.

Zum einen kann ein Drehmoment unter sehr geringen Energieverlusten übertragen werden, da eine Gleitreibung zwischen Spannmittel und Antriebsmittel, wie sie beispielsweise bei Verwendung einer statischen Führungsschiene als Spannmittel auftritt, nicht zu beobachten ist. Zum anderen ergeben sich Vorteile hinsichtlich des Verschleißes des Spannmittels, insbesondere aber hinsichtlich des Antriebsmittels. Zu berücksichtigen ist dabei, daß prinzipbedingt d. h. entsprechend der Funktion der Spannvorrichtung Spannkräfte zwischen dem Spannmittel und dem Antriebsmittel vorherrschen und daher die bei der Verwendung eines statischen Spannmittels zu beobachtende Gleitreibung nicht unerheblich ist.

Vorteilhaft sind Ausführungsformen der Spannvorrichtung, bei denen das Spannmittel Führungsmittel umfaßt, welche das Antriebsmittel seitlich führen.

Die Spannvorrichtung hat gemäß dieser Ausführungsform eine Doppelfunktion, nämlich das Spannen und gleichzeitige Führen des Antriebsmittels. Die Führungsmittel können dabei ganz unterschiedlich ausgebildet sein. Wird beispielsweise als Antriebsmittel eine Kette verwendet, besteht die Möglichkeit, das Spannmittel als Spannrolle in Gestalt eines Kettenrades auszubilden. Dabei greifen die Zähne des Kettenrades in die Kette ein und führen die Kette bzw. sichern die Kette gegen das Herausspringen aus dem Kettenrad.

Als Antriebsmittel können dabei sämtliche Gliederketten und Gelenkketten verwendet werden, insbesondere Bolzenketten, Zahnketten, Buchsenketten und Rollenketten.

Kettetriebe zeichnen sich durch ihre formschlüssige und daher schlupffreie Leistungsübertragung aus, weshalb sie insbesondere bevorzugt werden bei Anwendungen, bei denen ein schlupffreier Antrieb zwingend erforderlich ist, beispielsweise zum Antrieb der Nockenwellen einer Brennkraftmaschine. Ein konstantes Übersetzungsverhältnis kann bei Verwendung einer Kette als Zugmittel sichergestellt werden. Darüber hinaus ist die Belastung der Lager der Antriebs- bzw. Abtriebsräder bzw. der entsprechenden Wellen vergleichsweise gering, da Ketten auch ohne Vorspannung laufen. Schließlich sind Ketten unempfindlich gegen hohe Temperaturen.

Wird als Antriebsmittel ein Riemen verwendet, kann im Falle eines Zahnriemens wie zuvor für den Kettenantrieb beschrieben vorgegangen werden, wobei das Spannmittel als Zahnriemenrad ausgebildet werden kann, um den Zahnriemen seitlich zu führen.

Es können aber auch Flachriemen, Keilriemen oder Keilrippenriemen eingesetzt werden, wobei das Spannmittel seitlich an den Stirnseiten beispielsweise mit Führungsschienen ausgestattet werden kann.

Riementriebe zeichnen sich durch eine geräuscharme, stoß- und schwingungsgedämpfte Leistungsübertragung aus. Zudem sind sie im Vergleich zu Kettentrieben kostengünstiger, da sie im Aufbau und hinsichtlich der Fertigung weniger komplex sind. Als Antriebsrad und Abtriebrad dienen Riemenscheiben. Eine Schmierung ist grundsätzlich nicht erforderlich, kann aber vorgesehen werden, insbesondere um ein Abgleiten des Riemens auf den Spann- bzw. Führungsmitteln zu erleichtern.

Vorteilhaft sind Ausführungsformen der Spannvorrichtung, bei denen das Federelement eine Spiralfeder ist. Eine Spiralfeder eignet sich insbesondere zur Verwendung als Rückstellfeder bzw. Andrückfeder d. h. gerade für die hier relevanten Aufgaben bzw. Funktionen, die dem Federelement im Rahmen der Spannvorrichtung zugewiesen sind. Aus denselben Gründen sind auch Ausführungsformen vorteilhaft, bei denen das Federelement eine Drehfeder ist.

Vorteilhaft sind Ausführungsformen, bei denen die Spiralfeder bzw. die Drehfeder um die Achse herum angeordnet ist, um welche der Schwenkarm schwenkbar gelagert ist.

Vorteilhaft sind Ausführungsformen der Spannvorrichtung, bei denen die mindestens zwei Anschlagselemente auf einem bewegbaren Träger angeordnet sind. Die beiden Anschlagselemente sollen erfindungsgemäß einen konstanten Abstand aufweisen und in ihrer Bewegung gekoppelt sein. Ein konstruktiver Ansatz zur Realisierung dieser technischen Merkmale besteht darin, die Anschlagselemente auf einem gemeinsamen Träger anzuordnen. Bei einer Bewegung des Trägers bewegen sich dann beide Anschlagselement, wobei sie ihre Lage zueinander nicht verändern.

Da eine feste Verbindung zwischen den beiden Anschlagselementen besteht, nämlich in Gestalt des Trägers, wird beim Verschwenken des Schwenkarms nicht nur das erste Anschlagselement, sondern auch das zweite Anschlagselement vom Schwenkarm mitgenommen, wenn der Schwenkarm am ersten Anschlagselement anliegt und Richtung Antriebsmittel bewegt d. h. verschwenkt wird.

Vorteilhaft sind dabei Ausführungsformen der Spannvorrichtung, bei denen der Träger als eine um die Achse drehbare Trägerplatte ausgebildet ist. Bei dieser Ausführungsform wird eine Relativbewegung zwischen dem Schwenkarm und dem ersten Anschlagselement vermieden, da sich sowohl der Schwenkarm als auch die Trägerplatte und damit das erste Anschlagselement um dieselbe Achse drehen.

Darüber hinaus kann in vorteilhafter Weise eine Führung für den Träger bzw. die Trägerplatte ausgebildet werden, ohne daß zusätzliche Bauteile einzusetzen wären.

Grundsätzlich besteht aber auch die Möglichkeit, den Träger als Trägerschiene auszubilden, die beispielsweise in einer korrespondierenden zweiten Schiene geführt wird und sich ausschließlich translatorisch bewegen läßt.

Vorteilhaft sind Ausführungsformen der Spannvorrichtung, bei denen das Stopperelement als Ratschenmechanismus ausgebildet ist, wobei der Ratschenmechanismus vorzugsweise eine Zahnstange und ein mit dieser Zahnstange in Eingriff bringbares Sperrelement umfaßt.

Ein derartiger Ratschenmechanismus wird nach dem Stand der Technik bei Drehmomentschlüsseln bereits eingesetzt. Auf der Zahnstange sind beabstandet zueinander Zähne angeordnet. Während das Sperrelement in die eine Richtung der Zahnstange frei über die Zähne gleiten kann, hackt das Sperrelement bei Bewegungsumkehr, wenn es in die andere Richtung der Zahnstange bewegt wird, in die Zähne ein und verhindert im weiteren eine Bewegung von Sperrelement und Zahnstange relativ zueinander.

Vorteilhaft sind dabei Ausführungsformen der Spannvorrichtung, bei denen die Zahnstange mit dem Träger verbunden ist.

Vorteilhaft sind Ausführungsformen der Spannvorrichtung, bei denen eine Grundplatte vorgesehen ist. Die Grundplatte kann zur Aufnahme der Schwenkachse dienen. Des weiteren kann das Sperrelement eines Ratschenmechanismus an der Grundplatte angelenkt und gelagert werden.

Die Grundplatte dient dabei gewissermaßen zur Aufnahme der einzelnen Bauteile der Spannvorrichtung. Dies erleichtert es, die Spannvorrichtung als selbstständige und vormontierte Baugruppe auszubilden, was die Bereitstellung und Montage der Spannvorrichtung erheblich vereinfacht, wodurch auch die Kosten gesenkt werden können.

Zur weiteren Vereinfachung der Montage kann in der Grundplatte eine Ausnehmung oder Bohrung vorgesehen werden, die mit einer im Schwenkarm eingebrachten Bohrung oder Ausnehmung korrespondiert, wobei der Schwenkarm entgegen der Rückstellekraft des Federelementes verschwenkt wird bis die beiden Bohrungen miteinander korrespondieren d.h. fluchten. Ein Bolzen bzw. Stift wird dann durch die im Schwenkarm vorgesehene Bohrung hindurchgeführt und in die Bohrung der Grundplatte gesteckt, so daß der Schwenkarm bezüglich der Grundplatte arretiert wird bzw. ist.

Im Rahmen der Montage der Spannvorrichtung wird dann die Grundplatte befestigt. Wird anschließend die Arretierung durch Herausziehen des Bolzens bzw. Stiftes gelöst, verschwenkt das Federelement den Schwenkarm in Richtung Antriebsmittel, wodurch das Antriebsmittel gespannt wird.

Die zweite der Erfindung zugrunde liegende Teilaufgabe wird gelöst durch eine Verwendung der beschriebenen Spannvorrichtung zum Spannen eines Antriebsmittels einer Brennkraftmaschine.

Das bereits für die erfindungsgemäße Spannvorrichtung Gesagte gilt auch für die erfindungsgemäße Verwendung. Die Verwendung der Vorrichtung sorgt für eine Reduzierung des Flatterns und damit für eine sichere Übertragung eines Dreh- bzw. Antriebsmomentes.

Vorteilhaft sind Verwendungen der Spannvorrichtung, bei denen die Vorrichtung zum Spannen des Antriebsmittels eines Nockenwellenantriebs einer Brennkraftmaschine verwendet wird.

Vorteilhaft sind auch Verwendungen der Spannvorrichtung, bei denen die Vorrichtung zum Spannen des Antriebsmittels im Antrieb eines Nebenaggregats einer Brennkraftmaschine, beispielsweise im Antrieb einer Kühlmittelpumpe, einer Ölpumpe, einer Kraftstoffpumpe, eines mechanischen Laders, einer Lichtmaschine oder dergleichen, verwendet wird.

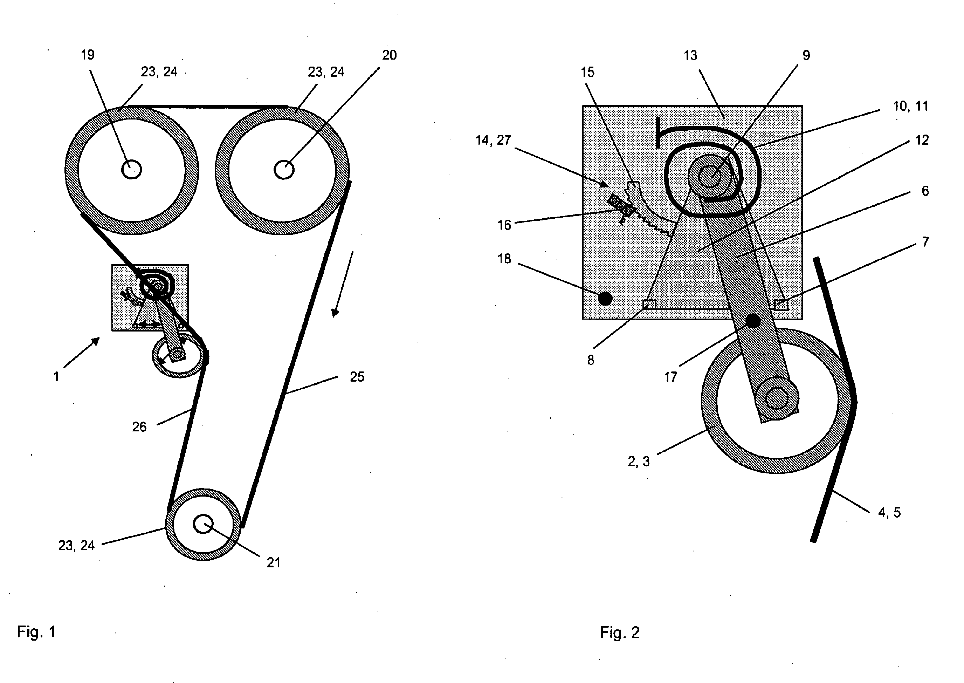

Im folgenden wird die Erfindung anhand eines Ausführungsbeispieles gemäß den Figuren 1 und 2 näher beschrieben. Hierbei zeigt:
- Fig. 1: schematisch eine Ausführungsform der Spannvorrichtung in einer Seitenansicht, und
- Fig. 2: schematisch eine Verwendung der in Figur 1 dargestellten Ausführungsform der Spannvorrichtung in einer Seitenansicht.

Figur 1 zeigt eine Spannvorrichtung 1 zum Spannen eines Antriebsmittels 4, wobei als Antriebsmittel 4 ein Riemen 5 dient.

Die Spannvorrichtung 1 verfügt über einen drehbar gelagerten Schwenkarm 6, der um eine Achse 9 schwenkbar ist. Als Spannmittel 2 dient eine Spannrolle 3, die am freien Ende des Schwenkarms 6 drehbar gelagert angeordnet ist und sich mit dem Riemen 5 in Eingriff befindet, wobei die Spannrolle 3 den Riemen 5 entlang seiner Längsachse mit Zugkräften beaufschlagt, damit spannt und bei umlaufendem Riemen 5 auf dem Riemen 5 abrollt.

Dabei wird die Spannrolle 3 mittels einer als Federelement 10 dienenden Spiralfeder 11 in Richtung Riemen 5 kraftbeaufschlagt bzw. in den Riemen 5 gedrückt.

Die Spannvorrichtung 1 ist dadurch gekennzeichnet, daß zwei Anschlagselemente 7, 8 vorgesehen sind, die auf einer um die Schwenkachse 9 drehbaren Trägerplatte 12 angeordnet sind, wobei ein erstes Anschlagselement 7 auf der dem Riemen 5 zugewandten Seite des Schwenkarms 6 und ein zweites Anschlagselement 8 auf der dem Riemen 5 abgewandten Seite des Schwenkarms 6 angeordnet ist.

Beim Verschwenken kann der Schwenkarm 6 das erste Anschlagselement 7 in Richtung Antriebsmittel 4 bzw. Riemen 5 mitnehmen, wenn der Schwenkarm 6 am ersten Anschlagselement 7 anschlägt und durch die Spiralfeder 11 weiter in Richtung Riemen 5 gedrückt wird. Dabei dreht sich die Trägerplatte 12 um die Schwenkachse 9, wodurch auch das zweite Anschlagselement 8, das ebenfalls auf der Trägerplatte 12 angeordnet ist, in Richtung Riemen 5 mitgenommen wird. Dadurch sind die Anschlagselemente 7, 8 in ihrer Bewegung miteinander gekoppelt.

Ein Stopperelement 27 schränkt die Bewegungsfreiheit des zweiten Anschlagselementes 8 und damit die Bewegungsfreiheit der gesamten Trägerplatte 12 ein und zwar in der Art, daß nur eine Bewegung in Richtung Riemen 5 zugelassen wird. Als Stopperelement 27 dient ein Ratschenmechanismus 14, der eine Zahnstange 15 und ein mit dieser Zahnstange 15 in Eingriff befindliches Sperrelement 16 umfaßt, wobei die Zahnstange 15 mit der Trägerplatte 12 verbunden ist und das Sperrelement 16 auf einem an einer Grundplatte 13 angeordneten Zapfen drehbar gelagert ist.

Der Ratschenmechanismus 14 bewirkt, daß eine einmal vorgenommene Schwenkbewegung der Trägerplatte 12 in Richtung Antriebsriemen 5 unumkehrbar ist; es sei denn, das Sperrelement 16 und die Zahnstange 15 werden gezielt voneinander getrennt, indem das Sperrelement 16 von der Zahnstange 15 weg verschwenkt wird.

Ein Zurückschwenken der um die Schwenkachse 6 verschwenkbaren Spannrolle 3 entgegen der Federkraft der Spiralfeder 11 wird durch das zweite Anschlagselement 8 eingeschränkt, wodurch auch das Flattern des Riemens 5 begrenzt wird.

Dadurch kann die auf dem Schwenkarm 6 gelagerte Spannrolle 3 nicht mehr beliebig verschwenkt werden, sondern beim Flattern des Riemens 5 bzw. Verschwenken des Schwenkarms 6 lediglich einen vorgebaren Verschwenkwinkel überstreichen. Die Schwenkbewegung der Spannrolle 3 wird einerseits durch den Antriebsriemen 5 und andererseits durch das zweite Anschlagselement 8 begrenzt. Das erste Anschlagselement 7 dient dabei als Mitnehmer für die Trägerplatte 12 und das zweite Anschlagselement 8.

Die Grundplatte 13 dient zur Aufnahme der einzelnen Bauteile der Spannvorrichtung 1. Dies erleichtert es, die Spannvorrichtung 1 als vormontierte Baugruppe auszubilden.

Die Grundplatte 13 und der Schwenkarm 6 verfügen jeweils über eine Arretierbohrung 17, 18. Wird der Schwenkarm 6 entgegen der Rückstellekraft der Spiralfeder 11 verschwenkt bis die im Schwenkarm 6 vorgesehene erste Arretierbohrung 17 mit der zweiten, in der Grundplatte 13 vorgesehen Arretierbohrung 18 fluchtet, kann durch Einführen eines Arretierstiftes in die beiden Bohrungen 17, 18 der Schwenkarm 6 auf der Grundplatte 13 fixiert werden. Im Rahmen der Montage wird dann diese Arretierung bzw. Fixierung gelöst, so daß die Spannrolle 3 getrieben von der Federkraft der Spiralfeder 11 in Eingriff gebracht wird mit dem Antriebsmittel 4.

Figur 2 zeigt schematisch eine Verwendung der in Figur 1 dargestellten Ausführungsform der Spannvorrichtung 1 in einer Seitenansicht. Die Spannvorrichtung 1 wird zum Spannen des Antriebsmittels eines Nockenwellenantriebs einer Brennkraftmaschine verwendet.

Zum Antrieb der beiden Nockenwellen 19, 20 dient die Kurbelwelle 21 als Antriebswelle eines gemeinsamen Zugmitteltriebes, wobei das auf der Kurbelwelle 21 angeordnete Antriebsrad 22 und die auf den Nockenwellen 19, 20 angeordneten Abtriebsräder 23 in der Weise ausgelegt d.h. dimensioniert sind, daß bei Betrieb einer Vier-Takt-Brennkraftmaschine die Nockenwellen 19, 20 mit der halben Kurbelwellendrehzahl umlaufen. Um dieses Übersetzungsverhältnis zu realisieren, weisen die auf den Nockenwellen 19, 20 angeordneten Abtriebsräder 23 einen doppelt so großen Durchmesser auf wie das auf der Kurbelwelle 21 angeordnete Antriebsrad 22. Bei dem Antriebsrad 22 und den Abtriebsrädern 23 handelt es sich vorliegend um Riemenräder 24.

Die Spannvorrichtung 1 ist im sogenannten Leertrum 26 und nicht im Zugtrum 25 angeordnet, da der Zugtrum 25 des Antriebsmittels von der Kurbelwelle 21 bzw. dem auf der Kurbelwelle 21 vorgesehenen Antriebsrad 22 mit Zugkräften belastet wird, wohingegen der Leertrum 26 vom Antriebsmoment nicht direkt beansprucht wird, daher weniger unter Spannung steht und sich zum Spannen eignet.

### Bezugszeichen

- 1: Spannvorrichtung
- 2: Spannmittel
- 3: Spannrolle
- 4: Antriebsmittel
- 5: Riemen
- 6: Schwenkarm
- 7: erstes Anschlagselement
- 8: zweites Anschlagselement
- 9: Schwenkachse
- 10: Federelement
- 11: Spiralfeder
- 12: Trägerplatte
- 13: Grundplatte
- 14: Ratschenmechanismus
- 15: Zahnstange
- 16: Sperrelement
- 17: erste Arretierbohrung
- 18: zweite Arretierbohrung
- 19: Einlaßnockenwelle
- 20: Auslaßnockenwelle
- 21: Kurbelwelle
- 22: Antriebsrad
- 23: Abtriebsrad
- 24: Riemenrad
- 25: Zugtrum
- 26: Leertrum
- 27: Stopperelement

## Patentansprüche

1. Spannvorrichtung (1) zum Spannen eines Antriebsmittels (4) wie beispielsweise einer Kette oder eines Riemens (5), insbesondere zur Verwendung in einer Brennkraftmaschine, mit einem auf einem Schwenkarm (6) gelagerten und um eine Achse (9) schwenkbaren Spannmittel (2), welches mit dem Antriebsmittel (4) in Eingriff bringbar ist und **dadurch** das Antriebsmittel (4) entlang seiner Längsachse mit Zugkräften beaufschlagt und damit spannt, wobei das Spannmittel (2) mittels eines Federelementes (10) in Richtung Antriebsmittel (4) kraftbeaufschlagt ist, wobei mindestens zwei - zueinander in einem unveränderbaren Abstand angeordnete-bewegbare Anschlagselemente (7, 8) vorgesehen sind, **dadurch gekennzeichnet**, daβ, die Auschlagselemente (8,9) auf einem - relativ zum Schwenkarm bewegbaren - Träger angeordnet sind, und
■ ein erstes Anschlagselement (7) auf der dem Antriebsmittel (4) zugewandten Seite des Schwenkarms (6) angeordnet ist, welches vom Schwenkarm (6) in Richtung Antriebsmittel (4) mitnehmbar ist, und
■ ein zweites Anschlagselement (8) auf der dem Antriebsmittel (4) abgewandten Seite des Schwenkarms (6) angeordnet ist, welches mittels eines Stopperelementes (27) in der Bewegungsfreiheit in der Art eingeschränkt ist, daß nur eine Bewegung in Richtung Antriebsmittel (4) zugelassen ist.

2. Spannvorrichtung (1) nach Anspruch 1, **dadurch gekennzeichnet, daß** das Spannmittel (2) eine Spannrolle (3) umfaßt, die drehbar auf dem Schwenkarm (6) gelagert ist.

3. Spannvorrichtung (1) nach Anspruch 1 oder 2, **dadurch gekennzeichnet, daß** das Spannmittel (2) Führungsmittel umfaßt, welche das Antriebsmittel (4) seitlich führen.

4. Spannvorrichtung (1) nach einem der vorherigen Ansprüche, **dadurch gekennzeichnet, daß** das Federelement (10) eine Spiralfeder (11) ist.

5. Spannvorrichtung (1) nach einem der vorherigen Ansprüche, **dadurch gekennzeichnet, daß** der Träger als eine um die Achse (9) drehbare Trägerplatte (12) ausgebildet ist.

6. Spannvorrichtung (1) nach einem der vorherigen Ansprüche, **dadurch gekennzeichnet, daß** das Stopperelement (27) als Ratschenmechanismus (14) ausgebildet ist.

7. Spannvorrichtung (1) nach Anspruch 6, **dadurch gekennzeichnet, daß** der Ratschenmechanismus (14) eine Zahnstange (15) und ein mit dieser Zahnstange (15) in Eingriff bringbares Sperrelement (16) umfaßt.

8. Spannvorrichtung (1) nach Anspruch 7, **dadurch gekennzeichnet, daß** die Zahnstange (15) mit dem Träger verbunden ist.

9. Verwendung einer Spannvorrichtung (1) nach einem der vorherigen Ansprüche, **dadurch gekennzeichnet, daß** die Vorrichtung (1) zum Spannen eines Antriebsmittels (4) einer Brennkraftmaschine verwendet wird.

10. Verwendung einer Spannvorrichtung (1) nach Anspruch 9, **dadurch gekennzeichnet, daß** die Vorrichtung (1) - zum Spannen des Antriebsmittels (4) eines Nockenwellenantriebs einer Brennkraftmaschine verwendet wird.

11. Verwendung einer Spannvorrichtung (1) nach Anspruch 9, **dadurch gekennzeichnet, daß** die Vorrichtung (1) zum Spannen des Antriebsmittels (4) im Antrieb eines Nebenaggregats einer Brennkraftmaschine, beispielsweise im Antrieb einer Kühlmittelpumpe, einer Ölpumpe, einer Kraftstoffpumpe, eines mechanischen Laders, einer Lichtmaschine oder dergleichen, verwendet wird.

## Claims

1. Tension device (1) for tensioning a drive means (4), such as, for example, a chain or a belt (5), in particular for use in an internal combustion engine, with a tension means (2) which is mounted on a pivoting arm (6) and is pivotable about an axis (9) and which can be brought into engagement with the drive means (4) and thereby acts with tensile forces upon the drive means (4) along its longitudinal axis and consequently tensions it, the tension means (2) being acted upon with force in the direction of the drive means (4) by means of a spring element (10), at least two movable abutment elements (7, 8) arranged at an invariable distance from one another being provided, **characterized in that**
■ the abutment elements (8, 9) are arranged on a carrier movable in relation to the pivoting arm, and
■ a first abutment element (7) is arranged on that side of the pivoting arm (6) which faces the drive means (4), which abutment element can be taken along in the direction of the drive means (4) by the pivoting arm (6), and
■ a second abutment element (8) is arranged on that side of the pivoting arm (6) which faces away from the drive means (4), which abutment element is restricted in freedom of movement by means of a stopper element (27) in such a way that only a movement in the direction of the drive means (4) is permitted.

2. Tension device (1) according to Claim 1, **characterized in that** the tension means (2) comprises a tension roller (3) which is mounted rotatably on the pivoting arm (6).

3. Tension device (1) according to Claim 1 or 2, **characterized in that** the tension means (2) comprises guide means which guide the drive means (4) laterally.

4. Tension device (1) according to one of the preceding claims, **characterized in that** the spring element (10) is a spiral spring (11).

5. Tension device (1) according to one of the preceding claims, **characterized in that** the carrier is designed as a carrier plate (12) rotatable about the axis (9).

6. Tension device (1) according to one of the preceding claims, **characterized in that** the stopper element (27) is designed as a ratchet mechanism (14).

7. Tension device (1) according to Claim 6,
**characterized in that** the ratchet mechanism (14) comprises a rack (15) and a blocking element (16) capable of being brought into engagement with this rack (15).

8. Tension device (1) according to Claim 7, **characterized in that** the rack (15) is connected to the carrier.

9. Use of a tension device (1) according to one of the preceding claims, **characterized in that** the device (1) is used for tensioning a drive means (4) of an internal combustion engine.

10. Use of a tension device (1) according to Claim 9, **characterized in that** the device (1) is used for tensioning the drive means (4) of a camshaft drive of an internal combustion engine.

11. Use of a tension device (1) according to Claim 9, **characterized in that** the device (1) is used for tensioning the drive means (4) in the drive of a secondary assembly of an internal combustion engine, for example in the drive of a coolant pump, oil pump, fuel pump, mechanical supercharger, dynamo or the like.

## Revendications

1. Dispositif de serrage (1) pour serrer un moyen d'entraînement (4) comme par exemple une chaîne ou une courroie (5), en particulier pour l'utilisation dans un moteur à combustion interne, comprenant un moyen de serrage (2) monté sur un bras pivotant (6) et pouvant pivoter autour d'un axe (9), qui peut être amené en prise avec le moyen d'entraînement (4) et sollicite de ce fait le moyen d'entraînement (4) le long de son axe longitudinal avec des forces de traction, et ainsi le serre, le moyen de serrage (2) étant sollicité en force au moyen d'un élément de ressort (10) dans la direction du moyen d'entraînement (4), au moins deux éléments de butée mobiles (7, 8) disposés à une distance fixe l'un par rapport à l'autre étant prévus,
**caractérisé en ce que** les éléments de butée (8, 9) sont disposés sur un support mobile par rapport au bras pivotant et
**en ce qu'**un premier élément de butée (7) est disposé du côté du bras pivotant (6) tourné vers le moyen d'entraînement (4), qui peut être entraîné par le bras pivotant (6) dans la direction du moyen d'entraînement (4), et
**en ce qu'**un deuxième élément de butée (8) est disposé du côté du bras pivotant (6) opposé au moyen d'entraînement (4), dont la liberté de mouvement est limitée par un élément de blocage (27) de telle sorte que seulement un mouvement dans la direction du moyen d'entraînement (4) soit autorisé.

2. Dispositif de serrage (1) selon la revendication 1, **caractérisé en ce que** le moyen de serrage (2) comprend un rouleau de serrage (3) qui est monté à rotation sur le bras pivotant (6).

3. Dispositif de serrage (1) selon la revendication 1 ou 2, **caractérisé en ce que** le moyen de serrage (2) comprend des moyens de guidage qui guident le moyen d'entraînement (4) latéralement.

4. Dispositif de serrage (1) selon l'une quelconque des revendications précédentes, **caractérisé en ce que** l'élément de ressort (10) est un ressort spirale (11).

5. Dispositif de serrage (1) selon l'une quelconque des revendications précédentes, **caractérisé en ce que** le support est réalisé sous forme de plaque de support (12) pouvant tourner autour de l'axe (9).

6. Dispositif de serrage (1) selon l'une quelconque des revendications précédentes, **caractérisé en ce que** l'élément de blocage (27) est réalisé sous forme de mécanisme à cliquet (14).

7. Dispositif de serrage (1) selon la revendication 6, **caractérisé en ce que** le mécanisme à cliquet (14) comprend une crémaillère (15) et un élément d'arrêt (16) pouvant être amené en prise avec cette crémaillère (15) .

8. Dispositif de serrage (1) selon la revendication 7, **caractérisé en ce que** la crémaillère (15) est connectée au support.

9. Utilisation d'un dispositif de serrage (1) selon l'une quelconque des revendications précédentes,
**caractérisé en ce que** le dispositif (1) est utilisé pour serrer un moyen d'entraînement (4) d'un moteur à combustion interne.

10. Utilisation d'un dispositif de serrage (1) selon la revendication 9, **caractérisé en ce que** le dispositif (1) est utilisé pour serrer le moyen d'entraînement (4) d'un entraînement d'arbre à came d'un moteur à combustion interne.

11. Utilisation d'un dispositif de serrage (1) selon la revendication 9, **caractérisé en ce que** le dispositif (1) est utilisé pour serrer le moyen d'entraînement (4) dans l'entraînement d'une unité auxiliaire d'un moteur à combustion interne, par exemple dans l'entraînement d'une pompe à fluide de refroidissement, d'une pompe à huile, d'une pompe à carburant, d'un compresseur mécanique, d'un alternateur, ou similaire.
